# FASCICULE DE BREVET EUROPEEN

(11) **EP 1 326 061 B1**
(45) Date de publication et mention de la délivrance du brevet: **10.10.2018**
(21) Numéro de dépôt: 02293208.1
(22) Date de dépôt: 20.12.2002
(51) Int. Cl.: G01F 1/075, G01F 1/115, G01F 15/12, G01F 15/14, G01F 15/00, G01F 15/06

(54) **Compteur de liquides**
Flüssigkeitszähler
Liquid meter

(30) Priorité: 21.12.2001 FR 0116788
(43) Date de publication de la demande: 09.07.2003
(73) Titulaire: DIEHL METERING SAS, 68300 Saint-Louis (FR)
(72) Inventeur: Meistermann, Christophe, 68460 Lutterbach (FR)
(74) Mandataire: Nuss, Laurent

(56) Documents cités:
- DE-U1- 29 511 030
- US-A- 2 124 763
- US-A- 2 857 763
- US-A- 4 391 139
- US-A- 4 409 848
- US-A- 4 598 583
- US-A- 4 609 217
- US-A- 5 540 107
- US-A- 6 149 801

## Description

La présente invention concerne un compteur de liquides, en particulier de type volumétrique ou à turbine.

Un compteur d'eau de type volumétrique ou à turbine se compose habituellement d'un corps en laiton ou en matière synthétique comportant un filtre, un dispositif de mesure, un afficheur, une cloison étanche séparant le dispositif de mesure immergé et l'afficheur en zone sèche, un système magnétique de transmission du mouvement du dispositif de mesure à l'afficheur et un organe de verrouillage assurant à la fois une cohésion de l'ensemble et le scellement du compteur conformément à la réglementation en vigueur concernant les appareils de mesure.

Un tel compteur d'eau est en particulier décrit dans les brevets appartenant au demandeur FR-B-2 753 152, FR-B-2 789 173 ainsi que dans le brevet US-A 409 848.

Ce type de compteur présente cependant un inconvénient dans la mesure où le remplacement de l'un des éléments le constituant, lors d'une réparation, n'est pas facile et nécessite un démontage quasi complet des éléments un à un dudit compteur, ce qui entraîne une perte de temps ainsi que des coûts relativement élevés.
On connaît également par US-A-5 540 107 un compteur qui comporte une partie mesure de flux et une partie contenant l'électronique, ces deux parties étant assemblées sous forme modulaire. Un tel compteur reprend donc les caractéristiques des compteurs traditionnels précédemment décrits en prévoyant une séparation étanche entre la mesure et la partie affichage et calcul. En effet, la partie filtration, reste toujours au niveau de la partie mesure et nécessite un démontage complet de l'ensemble partie mesure pour remplacer le filtre, par exemple.
Certains comportent également des éléments amovibles comme le couvercle tel que cela est décrit dans le brevet US-A-2 124 763. Cependant, ceci présente des inconvénients au niveau de la sécurité, le caractère amovible du couvercle pouvant induire des risques de fraude ou des mauvais fonctionnements liés à un enlèvement de couvercle.

D'autres compteurs comme celui décrit dans US-A-6 149 801 décrit la présence d'un filtre dans un compteur d'eau porté par un élément distinct. Cependant, cet élément ne peut être retiré qu'après démontage de l'ensemble du compteur.
Les documents de brevet US 4 391 139, US 2 857 763, US 4 598 583 et DE 295 11 030 décrivent également un compteur de ce type.
Aussi, le but de l'invention est de proposer un compteur dans lequel le remplacement de chacun des éléments le constituant est facilité de telle sorte que la réparation dudit compteur est aisée, rapide et peu coûteuse et qu'il est possible de pratiquer ladite réparation sur le site d'implantation dudit compteur lorsque la réglementation le permet.

A cet effet, l'invention a pour objet un compteur de liquides, en particulier de type volumétrique ou à turbine, comportant en tant qu'éléments constitutifs un corps, un filtre, une chambre de mesure dans laquelle est disposé un dispositif de mesure rotatif immergé, un totalisateur, une séparation étanche formant un plateau d'étanchéité entre ledit dispositif de mesure immergé et le totalisateur en zone sèche, des moyens de transmission du mouvement du dispositif de mesure au totalisateur, lesdits éléments constitutifs étant organisés sous forme de modules indépendants comprenant un module de mesure et un module totalisateur, le module de mesure étant constitué de la chambre de mesure complète et d'au moins un aimant rotatif transmetteur du mouvement de l'instrument de mesure, comportant en outre en tant qu'éléments constitutifs un module de verrouillage et un module de filtration, lesdits éléments constitutifs comportant respectivement des moyens d'assemblage complémentaires permettant leur assemblage avec le corps du compteur et/ou les uns avec les autres pour constituer ledit compteur, dans lequel les moyens d'assemblage complémentaires dudit module de mesure sont constitués d'au moins deux barrettes longitudinales, de préférence de sections différentes, ménagées sur la face extérieure de la chambre de mesure, servant de moyens de guidage et de positionnement dudit module dans le logement du corps du compteur, et de moyens de vissage ménagés sur la périphérie extérieure dudit plateau d'étanchéité dudit module de mesure pour coopérer avec des moyens de vissage complémentaires du corps du compteur, ledit plateau d'étanchéité étant monté sur la chambre de mesure, libre en rotation par rapport à celle-ci, caractérisé en ce que le plateau d'étanchéité comporte une couronne de lamelles élastiques appelées « clips » qui comportent des dents de retenue, ladite couronne ceignant la partie supérieure de la chambre de mesure une fois le plateau d'étanchéité en place tandis que les dents de retenue coopèrent avec un épaulement périphérique continu ménagé en retrait dans la partie supérieure de la chambre de mesure.

Ainsi de manière avantageuse, les modules selon l'invention constituent des sous-ensembles finis d'éléments constitutifs du compteur qui sont parfaitement séparables les uns des autres sans impliquer un démontage du compteur élément par élément.

Ainsi, le compteur de liquides, en particulier d'eau, selon l'invention comporte un corps dans lequel sont montés un module de filtration, un module de mesure, d'affichage et un module de verrouillage.

Le module de filtration est essentiellement constitué d'un filtre présentant une surface filtrante dont la section de passage est au moins égale à celle de la tubulure d'arrivée de liquides et dont la dimension des mailles permet d'arrêter les particules solides de sorte qu'on puisse obtenir une bonne protection des organes de mesure contre les corps étrangers.

Lors de travaux mal maîtrisés sur le réseau d'eau, des incidents, tels qu'une arrivée massive de sable, peuvent arriver et avoir pour conséquence que le filtre se colmate et que, sous l'effet de la pression, il se déforme et éclate, laissant les particules solides migrer à travers la chambre de mesure et détruisant cette dernière avant de s'écouler au point de puisage de l'usager.

De manière à éviter l'éclatement du filtre, le module de filtration comporte une armature comportant de petits piliers d'appui qui s'opposent à la déformation de la surface filtrante.

De cette manière, on évite avantageusement l'éclatement du filtre et le seul phénomène qui se manifeste, consiste en une baisse notable de la pression de l'eau provoquant de la part de l'usager l'appel du service de maintenance.
Le module de mesure est constitué de la chambre de mesure complète, d'au moins un aimant rotatif transmetteur du mouvement de l'instrument de mesure et d'un plateau d'étanchéité.
Avantageusement, le module de mesure peut être étalonné séparément du compteur sur des bancs d'étalonnage conçus à cet effet. En effet, bien que ne disposant pas de totalisateur, il est aisé de lui en adjoindre un pour la durée de l'étalonnage ou encore d'utiliser la rotation de l'aimant transmetteur pour actionner un capteur électronique. Le module de mesure selon l'invention est donc un organe métrologique interchangeable permettant de garantir la métrologie du compteur après l'échange.
Une caractéristique connue des systèmes de mesure volumétrique étant d'être insensibles aux faibles variations des volumes internes du corps des compteurs, on comprend que le module de mesure selon l'invention est un organe métrologique interchangeable permettant de garantir la métrologie du compteur après un échange.
Le module totalisateur est composé d'un boîtier renfermant au moins un aimant rotatif entraînable par l'aimant rotatif du module de mesure et un totalisateur. Les moyens d'assemblage complémentaires dudit module totalisateur sont constitués par la forme extérieure dudit boîtier conformée pour se loger dans une cavité ménagée sur la partie supérieure du plateau d'étanchéité du module de mesure.

Le module de verrouillage est constitué d'un capot de verrouillage conformé pour recouvrir le module totalisateur et s'étendre jusqu'à la paroi du corps du compteur et qui comporte en tant que moyens d'assemblage complémentaires des organes d'ancrage irréversible sur le module de mesure.

Ainsi après montage du module de verrouillage, celui-ci ne peut être retiré sans destruction de telle sorte qu'il constitue l'organe de scellement réglementaire du compteur d'eau.

De manière avantageuse, il est possible d'adjoindre au compteur selon l'invention des éléments extérieurs tels qu'émetteurs d'impulsions électriques ou un système de radio transmission de l'index du compteur par exemple, appelés « modules externes ».

On décrira maintenant l'invention plus en détail en référence au dessin dans lequel :
la figure 1 représente une vue en coupe longitudinale d'un compteur d'eau selon l'invention ;
la figure 2 représente une vue en perspective éclatée du compteur selon la figure 1 ;
la figure 3 représente une vue en perspective éclatée du dessous du module de mesure du compteur selon la figure 1 ;

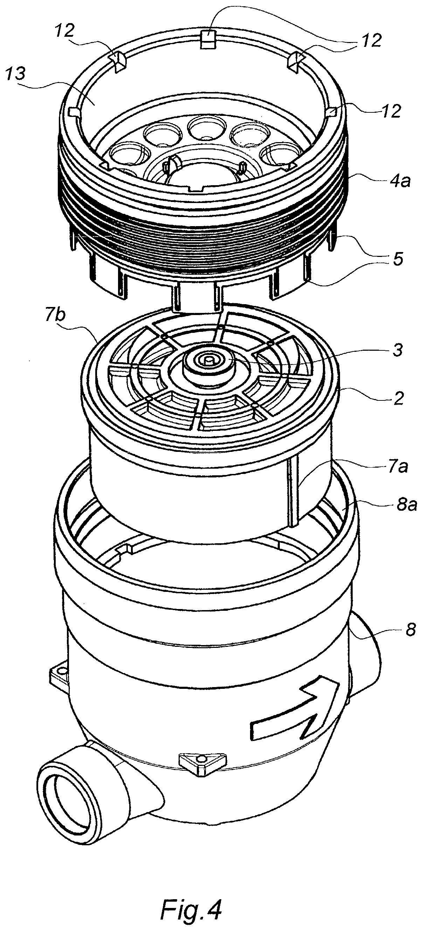

la figure 4 représente une vue en perspective éclatée du dessus du module de mesure du compteur selon la figure 1 ;
la figure 5 représente une vue en perspective éclatée du dessus du module d'affichage du compteur selon la figure 1 ;
la figure 6 représente une vue en perspective éclatée du disque indicateur du module d'affichage selon la figure 5 ;
la figure 7a et 7b représentent une vue en perspective du dessus et du dessous du module de verrouillage du compteur selon la figure 1 ;
les figures 8a, 8b, 8c, 8d, 8e et 8f représentent respectivement une vue en perspective du dessus du module de verrouillage et des détails dudit module de verrouillage selon la figure 7a ;
la figure 9 représente une vue en perspective du dessus du module de filtration.

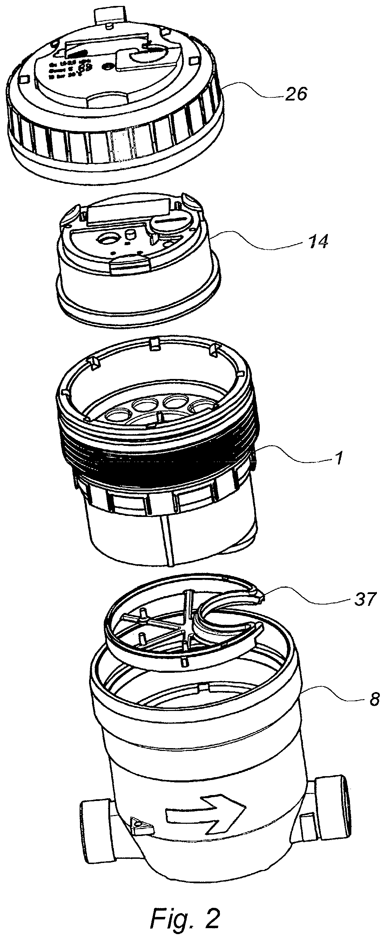

Le compteur d'eau selon l'invention est constitué d'un corps 8 comportant un module de mesure 1, un module d'affichage 14, un module de verrouillage 26 et un module de filtration 37, comme on peut le voir à la figure 2.

Le module de mesure 1 est composé de la chambre de mesure 2 complète, d'un aimant rotatif 3 transmetteur du mouvement de l'instrument de mesure et d'un plateau d'étanchéité 4.

Le plateau d'étanchéité 4 constitue la cloison étanche séparant la partie immergée de la partie sèche du compteur.

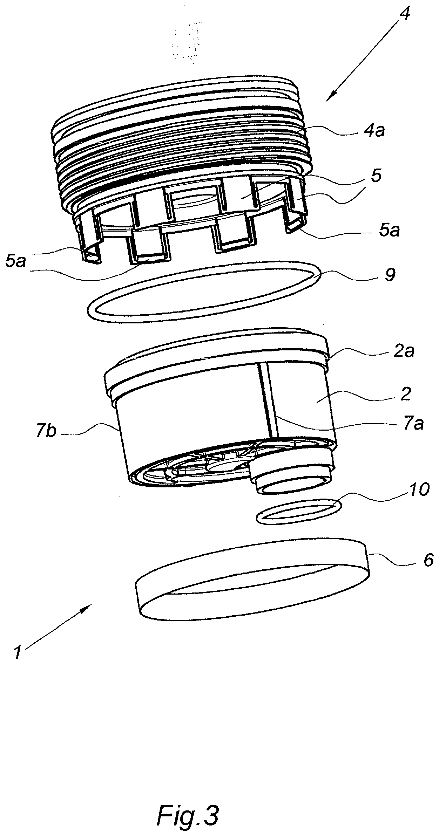

Le plateau d'étanchéité 4 est monté sur la chambre de mesure 2 et comporte à cet effet une couronne de lamelles élastiques 5 appelées « clips » qui comportent des dents de retenue 5a (voir la figure 3), ladite couronne ceignant la partie supérieure de la chambre de mesure 2 une fois le plateau d'étanchéité 4 en place tandis que les dents de retenue 5a coopèrent avec un épaulement 2a périphérique continu ménagé en retrait dans la partie supérieure de la chambre de mesure 2.

Ainsi, lors de la mise en place du plateau d'étanchéité 4 sur la chambre de mesure 2, les lamelles élastiques 5 du fait des dents de retenue 5a sont écartées élastiquement vers l'extérieur et une fois le plateau 4 en place, les lamelles élastiques 5 reviennent à leur position initiale, les dents de retenue 5a se logeant sous l'épaulement 2a.

Le plateau d'étanchéité 4 est par conséquent monté sur la chambre de mesure 2, libre en rotation par rapport à celle-ci, l'épaulement 2a étant périphérique et continu.

La chambre de mesure 2 présente sur sa face extérieure au moins deux barrettes longitudinales 7a et 7b de préférence de sections différentes et qui permettent un montage guidé du module de mesure dans le logement du corps 8 du compteur et une mise en place correcte dudit module 1.

Par ailleurs, le plateau d'étanchéité 4 présente sur sa périphérie extérieure des moyens de vissage tels qu'un filet 4a qui coopèrent avec des moyens de vissage complémentaires tels qu'une partie filetée 8a ménagée dans le corps 8 du compteur.

Ainsi lorsque le module de mesure 1 est monté dans le corps 8 du compteur, les barrettes 7a et 7b permettent son positionnement correct dans ledit corps 8 tandis que les moyens de vissage complémentaires du plateau d'étanchéité 4 et du corps 8 permettent sa fixation dans ledit corps 8.

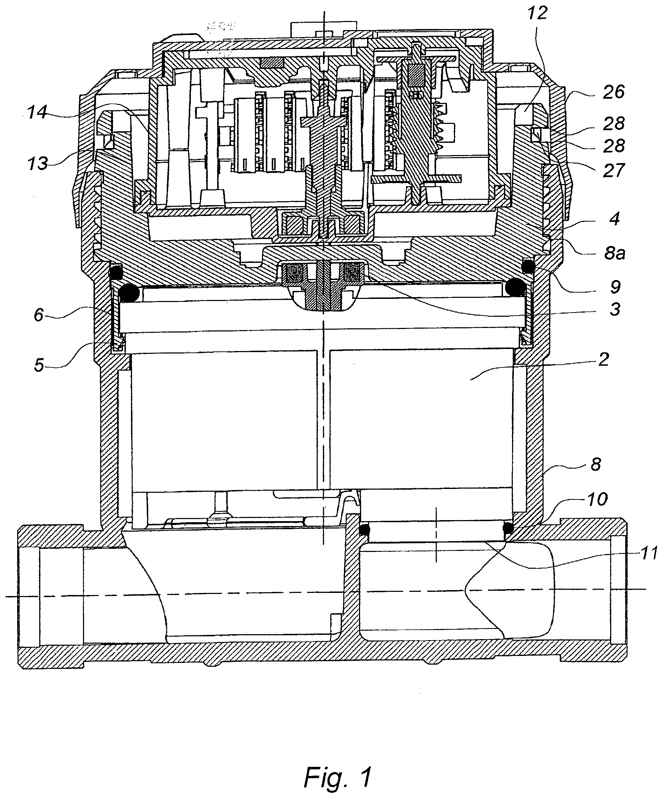

Une bague de scellement 6 comme on peut la voir aux figures 1 et 3 garantit qu'aucune tentative frauduleuse de démontage dudit module de mesure 1 ne peut être pratiquée.

Entre la chambre de mesure 2 et le plateau d'étanchéité 4, on met en place un joint 9 qui assure l'étanchéité entre les deux tandis qu'un joint 10 assure l'étanchéité entre la chambre 2 et l'orifice de refoulement de l'eau 11 (sortie du compteur).

De manière à faciliter le vissage du module de mesure 1, on ménage dans la partie supérieure du plateau d'étanchéité une série d'encoches 12, par exemple huit, qui servent à la mise en place d'un outil spécial pour le vissage.

En outre, la partie supérieure du plateau d'étanchéité 4 comporte une cavité 13 destinée à recevoir le module totalisateur 14.

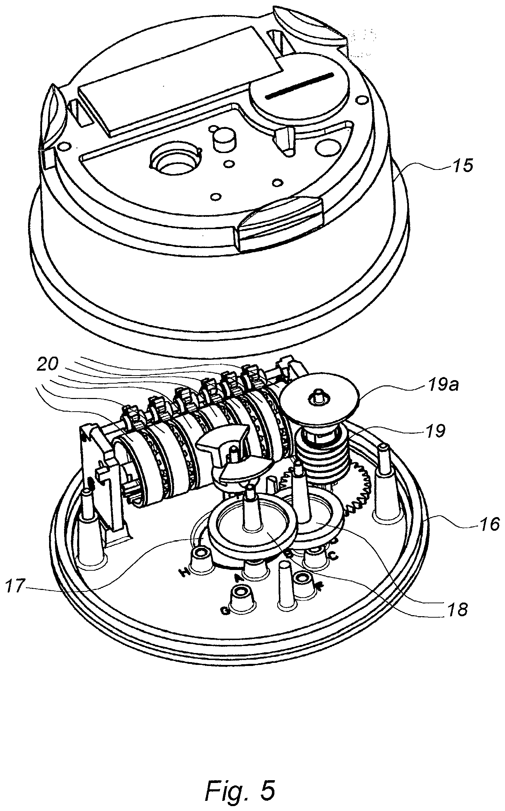

Le module totalisateur 14 visible à la figure 5 est composé d'un boîtier étanche constitué d'une capsule 15 et d'un culot 16 réalisés de préférence en matière synthétique transparente et soudés l'un à l'autre à leur périphérie pour créer l'étanchéité. La matière synthétique transparente constituant la capsule ainsi que le culot est choisie de manière à garantir une meilleure homogénéité de la soudure.

La capsule 15 et le culot 16 sont conformés de manière à présenter des paliers appropriés pour servir de platines à au moins un aimant rotatif 17 entraînable en rotation par l'aimant rotatif transmetteur 3 du module de mesure 1, à un train de pignons démultiplicateurs 18, à un disque indicateur 19 et à un train de rouleaux numériques 20 de l'afficheur appelé « ogomètre ».

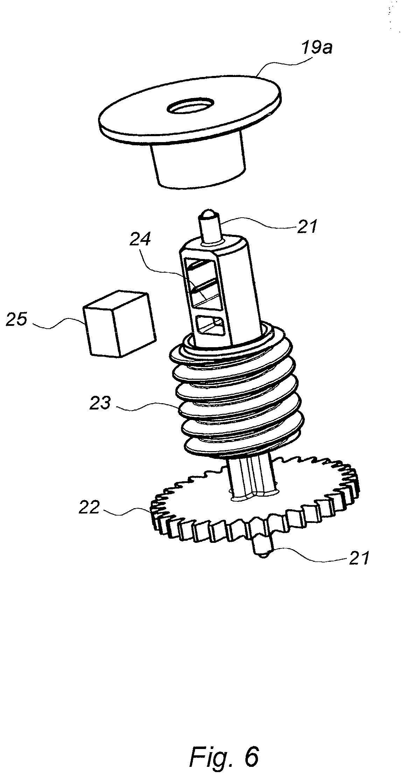

Le disque indicateur 19 comme cela est visible à la figure 6 se compose d'un axe 21 portant le dernier pignon 22 de la chaîne cinématique et d'une vis sans fin d'entraînement de l'ogomètre 23.

Le disque indicateur proprement dit 19a porte en sa partie inférieure un cylindre qui vient recouvrir et verrouiller un aimant 25 destiné à commander le fonctionnement d'un module externe. Cet aimant 25 est placé dans un logement 24 ménagé sur l'axe 21 et est ainsi bien centré dans l'axe 21 du disque indicateur 19. On évite de ce fait un couple résistant qui pourrait résulter si l'aimant 25 était légèrement désaxé et qui serait susceptible d'altérer sévèrement les qualités métrologiques du compteur. On obtient par conséquent la possibilité de positionner parfaitement l'aimant 25 et de le verrouiller dans la position choisie.

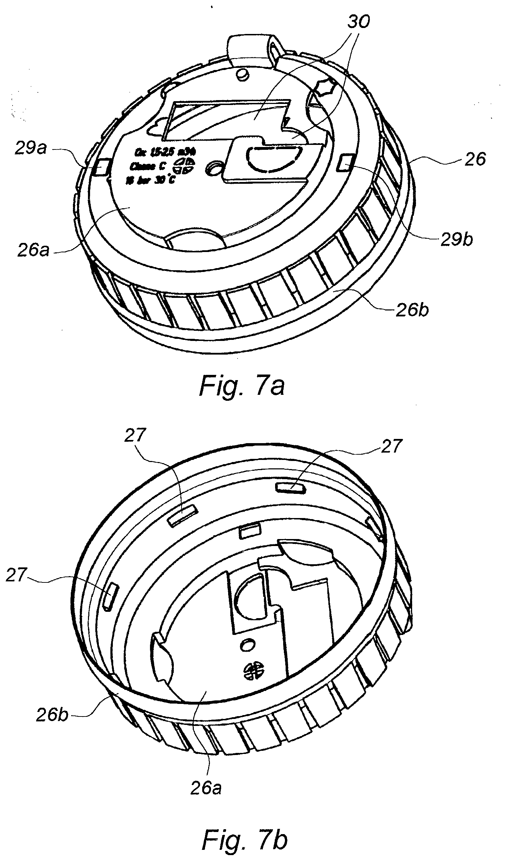

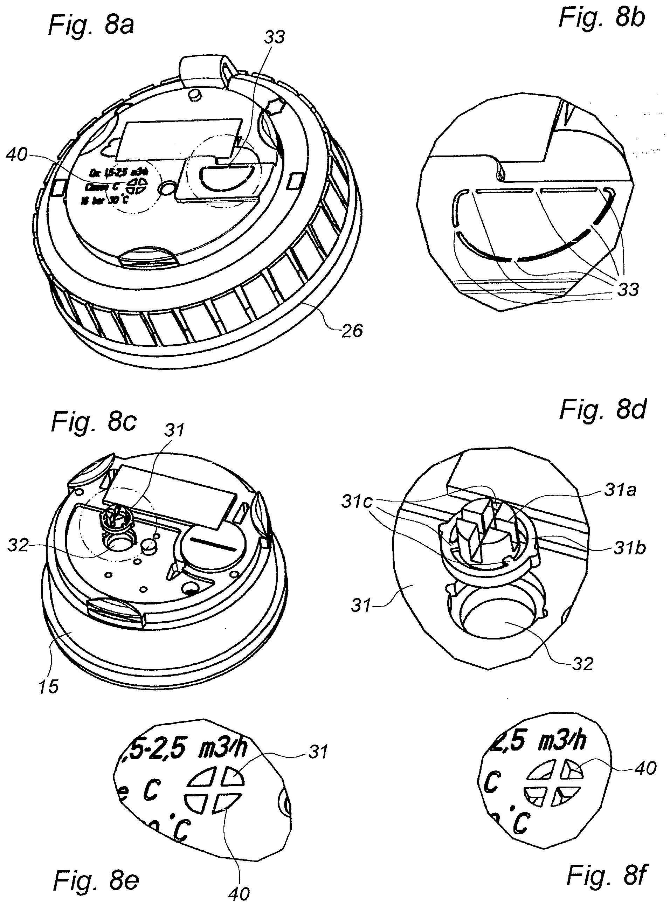

Le module de verrouillage visible aux figures 7a, 7b et 8a-8e est constitué par un capot de verrouillage 26.

Ce capot 26 se présente sous la forme d'un disque 26a pourvu d'une jupe cylindrique périphérique 26b. La jupe cylindrique 26b présente, sur sa face interne, une série d'organes d'ancrage ménagés en saillie tels que des dents 27, destinés à fixer le capot 26 de manière inamovible, les dents 27 coopérant avec une rainure périphérique continue 28 ménagée sur le module de mesure 1 (voir la figure 1).

Les dents 27 étant engagées dans la rainure périphérique continue 28, le capot de verrouillage 26 est entraînable en rotation par rapport au module de mesure 1.

Dans la mesure où le disque 26a du capot de verrouillage 26 vient recouvrir la partie supérieure du module totalisateur 14, il est conformé pour épouser la forme de la partie supérieure du module de totalisateur 14 et il comporte une ouverture 30 qui permet d'observer les indications de l'ogomètre 20 et du disque indicateur 19.

De ce fait, lors de la rotation du capot de verrouillage 26, on entraîne également la rotation du module totalisateur 14, et il est alors possible d'orienter le module de verrouillage 26 et donc le module totalisateur 14 pour faciliter la lecture des indications de l'ogomètre 20.

Le capot de verrouillage 26, une fois monté, ne peut être retiré sans destruction. Aussi, pour le démontage du compteur en vue d'une réparation ou d'un échange du module de comptage, le capot de verrouillage 26 présente des points de rupture, de préférence deux, 29a et 29b qui permettent l'introduction d'un outil spécial de démontage. La rupture des points 29a et 29b constitue une rupture de scellés et la destruction du capot 26 et au remontage, on doit utiliser un nouveau capot de verrouillage 26.

Lorsque la législation le permet, il est possible de remonter le capot 26 déposé et les points de ruptures 29a et 29b sont alors obturés par des étiquettes autocollantes spéciales. Le retrait de ces étiquettes entraîne leur autodestruction et elles peuvent porter les marques métrologiques de contrôle périodique.

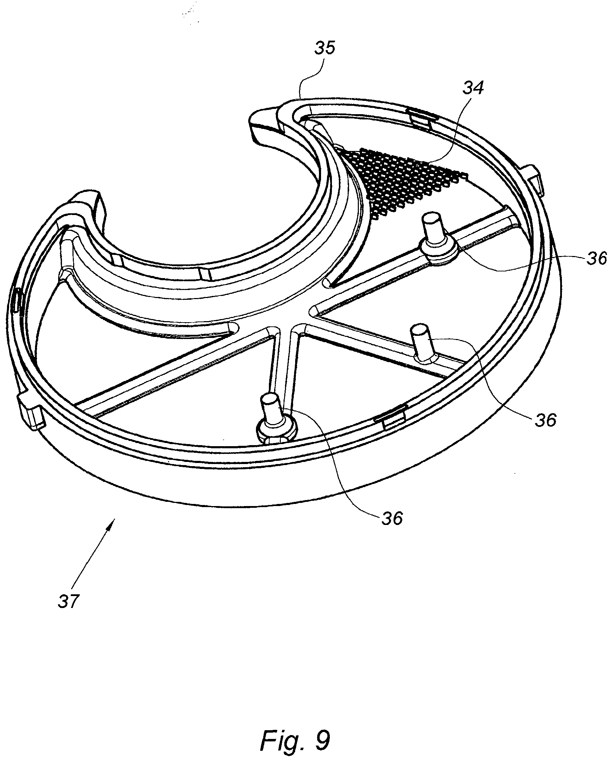

Le module de filtration 37 visible à la figure 9 est composé d'une surface filtrante 34 dont la section de passage est au moins égale à celle de la tubulure d'arrivée d'eau et dont la dimension des mailles permet d'arrêter les particules solides de l'ordre de 0,8 mm de diamètre, par exemple, de sorte que l'on puisse obtenir une bonne protection des organes de mesure contre les corps étrangers.

De manière à éviter l'éclatement du filtre lors d'incidents, le module de filtration 37 comporte une armature 35 comportant des petits piliers d'appui 36 qui s'opposent à la déformation de la surface filtrante 34.

Le module totalisateur 14 du compteur selon l'invention peut faire l'objet de tentatives de fraude dites « au serre joint ». Ainsi, des personnes malveillantes utilisent cet outil pour déformer temporairement le totalisateur du compteur de manière à provoquer un blocage des pignons et par conséquent une absence de comptage.

Lorsque cette fraude est habilement pratiquée, il est impossible après le retrait du serre joint de constater qu'elle a eu lieu. Le module totalisateur qui fait partie de la présente invention comporte deux dispositifs de détection de ce type de fraude.

Le premier dispositif est constitué d'un témoin 31 conçu comme une pièce de rupture de couleur voyante, constituée d'une partie centrale 31a, d'une partie périphérique 31b reliées entre elles par des zones de rupture 31c. Le témoin 31 est placé au droit d'un puits 32 ménagé dans la partie supérieure de la capsule du module totalisateur 26. Cette pièce 31 est immobilisée lors de l'assemblage final du compteur par l'adjonction du capot de verrouillage 26. Une lumière 40 dans la face supérieure dudit capot de verrouillage 26 permet de s'assurer que ledit témoin 31 est toujours en place. Lors d'une tentative de fraude, dès la plus petite déformation, le témoin 31 se casse en deux parties. La partie centrale 31a du témoin 31 tombe dans le puits 32 et devient invisible témoignant ainsi qu'une fraude s'est produite.

Le puits 32 est borgne en sa partie inférieure de sorte que la pièce de rupture ne puisse venir bloquer les pignons du totalisateur comme cela se produit dans certains dispositifs indicateurs de fraude.

Le deuxième dispositif de détection de fraude qui est complémentaire au précédent consiste à ménager des lignes de rupture 33 sur la surface supérieure du capot de verrouillage 26 au droit du disque indicateur 19. Lorsque la tentative de fraude vise à bloquer en particulier le disque indicateur 19 la rupture de cette zone témoigne de la tentative de fraude.

## Revendications

1. Compteur de liquides, en particulier de type volumétrique ou à turbine, comportant en tant qu'éléments constitutifs un corps (8), un filtre, une chambre de mesure (2) dans laquelle est disposé un dispositif de mesure rotatif immergé, un totalisateur, une séparation étanche formant un plateau d'étanchéité entre ledit dispositif de mesure immergé et le totalisateur en zone sèche, des moyens de transmission du mouvement du dispositif de mesure au totalisateur, lesdits éléments constitutifs étant organisés sous forme de modules indépendants comprenant un module de mesure (1) et un module totalisateur (14), le module de mesure (1) étant constitué de la chambre de mesure (2) complète et d'au moins un aimant (3) rotatif transmetteur du mouvement de l'instrument de mesure, comportant en outre en tant qu'éléments constitutifs un module de verrouillage (26) et un module de filtration (37), lesdits éléments constitutifs comportant respectivement des moyens d'assemblage complémentaires permettant leur assemblage avec le corps du compteur et/ou les uns avec les autres pour constituer ledit compteur, dans lequel les moyens d'assemblage complémentaires dudit module de mesure (1) sont constitués d'au moins deux barrettes longitudinales (7a, 7b), de préférence de sections différentes, ménagées sur la face extérieure de la chambre de mesure (2), servant de moyens de guidage et de positionnement dudit module (1) dans le logement du corps (8) du compteur, et de moyens de vissage (4a) ménagés sur la périphérie extérieure dudit plateau d'étanchéité (4) dudit module de mesure pour coopérer avec des moyens de vissage (8a) complémentaires du corps (8) du compteur, ledit plateau d'étanchéité (4) étant monté sur la chambre de mesure (2), libre en rotation par rapport à celle-ci, **caractérisé en ce que** le plateau d'étanchéité (4) comporte une couronne de lamelles élastiques (5) appelées « clips » qui comportent des dents de retenue (5a), ladite couronne ceignant la partie supérieure de la chambre de mesure (2) une fois le plateau d'étanchéité (4) en place tandis que les dents de retenue (5a) coopèrent avec un épaulement (2a) périphérique continu ménagé en retrait dans la partie supérieure de la chambre de mesure (2).

2. Compteur de liquides selon la revendication 1 **caractérisé en ce que** le module totalisateur (14) est composé d'un boîtier renfermant au moins un aimant rotatif (17) entraînable par l'aimant (3) rotatif du module de mesure (1) et un totalisateur, le boîtier étant étanche et constitué d'une capsule (15) et d'un culot (16) réalisés de préférence en matière synthétique transparente et soudés l'un à l'autre à leur périphérie pour créer l'étanchéité, ladite capsule (15) et le culot (16) étant conformés de manière à présenter des paliers appropriés pour servir de platines à au moins un aimant rotatif (17), à un train de pignons démultiplicateurs (18), à un train de rouleaux numériques (20) de l'afficheur appelé « ogomètre » et à un disque indicateur (19) qui se compose d'un axe (21) portant le dernier pignon (22) de la chaîne cinématique et d'une vis sans fin d'entraînement de l'ogomètre (23), le disque indicateur proprement dit (19a) portant en sa partie inférieure un cylindre qui vient recouvrir et verrouiller un aimant (25) destiné à commander le fonctionnement d'un module externe.

3. Compteur de liquides selon la revendication 2 **caractérisé en ce que** les moyens d'assemblage complémentaires dudit module totalisateur (14) sont constitués par la forme extérieure dudit boîtier conformée pour se loger dans une cavité ménagée sur la partie supérieure du plateau d'étanchéité (4) du module de mesure (1).

4. Compteur de liquides selon l'une des revendications 1 à 3, **caractérisé en ce que** le module de verrouillage est constitué d'un capot de verrouillage (26) qui se présente sous la forme d'un disque (26a) pourvu d'une jupe cylindrique périphérique (26b) conformé pur recouvrir le module totalisateur (14) et s'étendre jusqu'à la paroi du corps (8) du compteur et qui comporte, sur sa face interne, en tant que moyens d'assemblage complémentaires, une série d'organes d'ancrage irréversible sur le module de mesure (1) ménagés en saillie tels que des dents (27), destinés à fixer le capot (26) de manière inamovible, les dents (27) étant engageables dans une rainure périphérique continue (28) ménagée sur le module de mesure (1), ledit capot de verrouillage (26) entraînable en rotation par rapport audit module de mesure (1) présentant des points de rupture, de préférence deux, (29a) et (29b) pour l'introduction d'un outil spécial de démontage.

5. Compteur de liquides selon l'une des revendications 1 à 4, **caractérisé en ce que** le module de filtration (37) est constitué d'un filtre présentant une surface filtrante (34) dont la section de passage est au moins égale à celle de la tubulure d'arrivée de liquides et dont la dimension des mailles permet d'arrêter des particules solides, le module de filtration (37) comportant en outre une armature (35) comportant de petits piliers d'appui (36) qui s'opposent à une déformation de la surface filtrante (34).

6. Compteur de liquides selon la revendication 4 **caractérisé en ce qu'**il comporte un dispositif de détection de fraude au serre-joint qui est constitué d'un témoin (31) conçu comme une pièce de rupture de couleur voyante, placé au droit d'un puits (32) ménagé dans la partie supérieure de la capsule du module totalisateur (14), ledit témoin (31) étant immobilisé lors de l'assemblage final du compteur par l'adjonction du capot de verrouillage (26) tandis qu'une lumière dans la face supérieure dudit capot de verrouillage (26) permet de s'assurer que ledit témoin (31) est toujours en place, ledit témoin (31) étant cassable dès la plus petite déformation lors d'une tentative de fraude de telle sorte qu'une partie centrale du témoin (31) tombe dans le puits (32) et devient invisible témoignant ainsi qu'une fraude s'est produite.

7. Compteur de liquides selon l'une des revendications 1 à 6, **caractérisé en ce qu'**il comporte un dispositif de détection de fraude constitué de lignes de rupture (33) ménagées sur la surface supérieure du capot de verrouillage (26) au droit du disque indicateur (19), ladite zone se rompant lors d'une tentative de blocage du disque indicateur (19).

## Patentansprüche

1. Flüssigkeitszähler, insbesondere volumetrischer oder Turbinenflüssigkeitszähler, welcher als Bestandteile einen Körper (8), ein Filter, eine Messkammer (2), in welcher eine eingetauchte rotierende Messvorrichtung angeordnet ist, einen Summierer, eine dichte Trennvorrichtung, die eine Dichtplatte zwischen der eingetauchten Messvorrichtung und dem Summierer in einem trockenen Bereich bildet, und Mittel zur Übertragung der Bewegung von der Messvorrichtung zu dem Summierer aufweist, wobei diese Bestandteile in Form von unabhängigen Modulen organisiert sind, die ein Messmodul (1) und ein Summiermodul (14) umfassen, wobei das Messmodul (1) aus der vollständigen Messkammer (2) und aus wenigstens einem rotierenden Magneten (3), der die Bewegung des Messinstruments überträgt, besteht, und welcher außerdem als Bestandteile ein Verriegelungsmodul (26) und ein Filtrationsmodul (37) aufweist, wobei die Bestandteile jeweils komplementäre Montagemittel aufweisen, die ihren Zusammenbau mit dem Körper des Zählers und/oder miteinander ermöglichen, um den Zähler zu bilden, wobei die komplementären Montagemittel des Messmoduls (1) aus wenigstens zwei Längsstegen (7a, 7b) bestehen, vorzugsweise mit unterschiedlichen Querschnitten, die auf der Außenseite der Messkammer (2) ausgebildet sind und als Mittel zur Führung und zur Positionierung des Moduls (1) in der Aufnahme des Körpers (8) des Zählers dienen, und aus Verschraubungsmitteln (4a), die auf dem Außenumfang der Dichtplatte (4) des Messmoduls ausgebildet sind, um mit komplementären Verschraubungsmitteln (8a) des Körpers (8) des Zählers zusammenzuwirken, wobei die Dichtplatte (4) auf der Messkammer (2) frei drehbar bezüglich derselben angebracht ist, **dadurch gekennzeichnet, dass** die Dichtplatte (4) einen Kranz von elastischen Plättchen (5), "Clips" genannt, aufweist, welche Haltezähne (5a) aufweisen, wobei der Kranz den oberen Teil der Messkammer (2) umspannt, nachdem die Dichtplatte (4) angebracht worden ist, während die Haltezähne (5a) mit einem durchgehenden Umfangsabsatz (2a) zusammenwirken, der im oberen Teil der Messkammer (2) zurückspringend ausgebildet ist.

2. Flüssigkeitszähler nach Anspruch 1, **dadurch gekennzeichnet, dass** das Summiermodul (14) aus einem Gehäuse besteht, das wenigstens einen rotierenden Magneten (17), der von dem rotierende Magneten (3) des Messmoduls (1) angetrieben werden kann, und einen Summierer enthält, wobei das Gehäuse dicht ist und aus einer Kapsel (15) und einem Sockel (16) besteht, die vorzugsweise aus durchsichtigem Kunststoff hergestellt sind und an ihrem Umfang miteinander verschweißt sind, um die Dichtheit herzustellen, wobei die Kapsel (15) und der Sockel (16) derart gestaltet sind, dass sie Lager aufweisen, die geeignet sind, als Grundplatten für wenigstens einen drehbaren Magneten (17), für einen Satz von Untersetzungsritzeln (18), für einen Satz von Ziffernrollen (20) der Anzeigevorrichtung und für eine Anzeigescheibe (19), welche aus einer das letzte Ritzel (22) der kinematischen Kette tragenden Achse (21) und aus einer Antriebsschnecke der Anzeigevorrichtung (23) besteht, zu dienen, wobei die eigentliche Anzeigescheibe (19a) in ihrem unteren Teil einen Zylinder trägt, der dann einen Magneten (25) abdeckt und verriegelt, welcher dazu bestimmt ist, den Betrieb eines externen Moduls zu steuern.

3. Flüssigkeitszähler nach Anspruch 2, **dadurch gekennzeichnet, dass** die komplementären Montagemittel des Summiermoduls (14) von der äußeren Form des Gehäuses gebildet werden, die so gestaltet ist, dass sie in einem Hohlraum aufgenommen werden kann, der im oberen Teil der Dichtplatte (4) des Messmoduls (1) ausgebildet ist.

4. Flüssigkeitszähler nach einem der Ansprüche 1 bis 3, **dadurch gekennzeichnet, dass** das Verriegelungsmodul aus einer Verriegelungshaube (26) besteht, welche die Form einer Scheibe (26a) aufweist, die mit einer zylindrischen Umfangsschürze (26b) versehen ist, die so gestaltet ist, dass sie das Summiermodul (14) abdeckt und sich bis zu der Wand des Körpers (8) des Zählers erstreckt, und welche auf ihrer Innenseite als komplementäre Montagemittel eine Reihe von Organen zur irreversiblen Verankerung an dem Messmodul (1) aufweist, die vorspringend ausgebildet sind, wie etwa Zähne (27), und dazu bestimmt sind, die Haube (26) auf unlösbare Weise zu befestigen, wobei die Zähne (27) in einer durchgehenden Umfangsnut (28) in Eingriff gebracht werden können, die an dem Messmodul (1) ausgebildet ist, wobei die Verriegelungshaube (26), die bezüglich des Messmoduls (1) drehend antreibbar ist, Durchbruchspunkte aufweist, vorzugsweise zwei, (29a) und (29b), für die Einführung eines Spezialwerkzeugs zur Demontage.

5. Flüssigkeitszähler nach einem der Ansprüche 1 bis 4, **dadurch gekennzeichnet, dass** das Filtrationsmodul (37) aus einem Filter besteht, das eine Filterfläche (34) aufweist, deren Durchflussquerschnitt wenigstens gleich demjenigen des Zulaufrohres für Flüssigkeiten ist und deren Maschengröße es ermöglicht, feste Partikel zurückzuhalten, wobei das Filtrationsmodul (37) außerdem eine Bewehrung (35) aufweist, die kleine Stützsäulen (36) aufweist, welche einer Verformung der Filterfläche (34) Widerstand entgegensetzen.

6. Flüssigkeitszähler nach Anspruch 4, **dadurch gekennzeichnet, dass** er eine Vorrichtung zur Erkennung von Betrug an der Spannschelle aufweist, welche aus einem Kontrollelement (31) besteht, das als ein Brechteil mit einer Signalfarbe ausgebildet ist, das an einem Schacht (32) angeordnet ist, der im oberen Teil der Kapsel des Summiermoduls (14) ausgebildet ist, wobei das Kontrollelement (31) beim endgültigen Zusammenbau des Zählers durch die Anfügung der Verriegelungshaube (26) fixiert wird, während eine Öffnung in der Oberseite der Verriegelungshaube (26) ermöglicht, sich davon zu überzeugen, dass das Kontrollelement (31) noch an seinem Platz ist, wobei das Kontrollelement (31) nach der kleinsten Verformung bei einem Betrugsversuch derart zerbricht, dass ein mittlerer Teil des Kontrollelements (31) in den Schacht (32) fällt und unsichtbar wird, was somit davon zeugt, dass ein Betrug begangen wurde.

7. Flüssigkeitszähler nach einem der Ansprüche 1 bis 6, **dadurch gekennzeichnet, dass** er eine Vorrichtung zur Erkennung von Betrug aufweist, welche aus Bruchlinien (33) besteht, die auf der Oberseite der Verriegelungshaube (26) an der Anzeigescheibe (19) ausgebildet sind, wobei dieser Bereich bei einem Versuch, die Anzeigescheibe (19) zu blockieren, zerbricht.

## Claims

1. Liquid meter, in particular of the volumetric or turbine type, having as its constituent elements a body (8), a filter, a measuring chamber (2) in which an immersed rotary measuring device is arranged, a totalizer, a leaktight separation forming a sealing plate between said immersed measuring device and the totalizer in a dry zone, transmission means for transmitting the movement of the measuring device to the totalizer, said constituent elements being organized in the form of independent modules comprising a measuring module (1) and a totalizer module (14), the measuring module (1) being composed of the complete measuring chamber (2) and of at least one rotary magnet (3) transmitting the movement of the measuring instrument, additionally having as its constituent elements a locking module (26) and a filtration module (37), said constituent elements having, respectively, complementary assembly means permitting their assembly with the body of the meter and/or with one another in order to constitute said meter, in which the complementary assembly means of said measuring module (1) are composed of at least two longitudinal bars (7a, 7b), preferably of different cross sections, which are formed on the outer face of the measuring chamber (2), serving as means for guiding and positioning said module (1) in the receptacle of the body (8) of the meter, and screwing means (4a) formed on the outer periphery of said sealing plate (4) of said measuring module in order to cooperate with complementary screwing means (8a) of the body (8) of the meter, said sealing plate (4) being mounted on the measuring chamber (2), freely in rotation with respect to the latter, **characterized in that** the sealing plate (4) has a crown of resilient blades (5) called "clips", which have retaining teeth (5a), said crown surrounding the upper part of the measuring chamber (2) once the sealing plate (4) is in place, while the retaining teeth (5a) cooperate with a continuous peripheral shoulder (2a) formed in a set-back position in the upper part of the measuring chamber (2).

2. Liquid meter according to Claim 1, **characterized in that** the totalizer module (14) is composed of a casing enclosing at least one rotary magnet (17) drivable by the rotary magnet (3) of the measuring module (1) and a totalizer, the casing being sealed and composed of a capsule (15) and a base (16) which are preferably made of transparent synthetic material and are welded to each other at their periphery in order to create the seal, said capsule (15) and the base (16) being configured so as to provide suitable bearings to serve as platens for at least one rotary magnet (17), for a reducing gear train (18), for a train of digital rollers (20) for the display called an "ogometer", and for an indicator disc (19) which is composed of an axle (21) carrying the last gear (22) of the kinematic chain and an endless screw for driving the ogometer (23), the indicator disc (19a) itself carrying in its lower part a cylinder which covers and locks a magnet (25) intended to control the operation of an external module.

3. Liquid meter according to Claim 2, **characterized in that** the complementary assembly means of said totalizer module (14) are provided by the outer shape of said casing adapted to fit in a cavity formed on the upper part of the sealing plate (4) of the measuring module (1).

4. Liquid meter according to one of Claims 1 to 3, **characterized in that** the locking module is composed of a locking cap (26) which is in the form of a disc (26a) provided with a peripheral cylindrical skirt (26b) shaped to cover the totalizer module (14) and to extend as far as the wall of the body (8) of the meter and which on its inner face has, as complementary assembly means, a series of members, for irreversible anchoring on the measuring module (1), which are formed in projection such as teeth (27) intended to fix the cap (26) immovably, the teeth (27) being able to engage in a continuous peripheral groove (28) formed on the measuring module (1), said locking cap (26) being drivable in rotation with respect to said measuring module (1) having break points, preferably two, (29a) and (29b), for the introduction of a special disassembly tool.

5. Liquid meter according to one of Claims 1 to 4, **characterized in that** the filtration module (37) is composed of a filter having a filtering surface (34) whose passage cross section is at least equal to that of the inlet tubing for liquid and of which the mesh size allows solid particles to be stopped, the filtration module (37) moreover having a framework (35) having small support pillars (36) which oppose a deformation of the filtering surface (34).

6. Liquid meter according to Claim 4, **characterized in that** it has a fraud detection device with clamp, which is composed of an indicator (31) designed as a break member of bright colour, placed in line with a well (32) formed in the upper part of the capsule of the totalizer module (14), said indicator (31) being immobilized during the final assembly of the meter by the addition of the locking cap (26), while a slot in the upper face of said locking cap (26) makes it possible to ensure that said indicator (31) is still in place, said indicator (31) being breakable at the slightest deformation during attempted fraud, such that a central part of the indicator (31) falls into the well (32) and becomes invisible, thereby indicating that fraud has taken place.

7. Liquid meter according to one of Claims 1 to 6, **characterized in that** it has a fraud detection device composed of break lines (33) formed on the upper surface of the locking cap (26) in line with the indicator disc (19), said zone breaking when an attempt is made to block the indicator disc (19) .
